# EUROPÄISCHE PATENTSCHRIFT

(11) **EP 2 107 778 B1**
(45) Veröffentlichungstag und Bekanntmachung des Hinweises auf die Patenterteilung: **03.07.2013**
(21) Anmeldenummer: 08153907.4
(22) Anmeldetag: 01.04.2008
(51) Int. Cl.: H04M 1/02, H04N 7/18, H04M 11/02

(54) **Stationsgerät für eine Hauskommunikationsanlage**
Stationary device for a house intercom system
Appareil de station pour une installation de communication domestique

(43) Veröffentlichungstag der Anmeldung: 07.10.2009
(73) Patentinhaber: GIRA Giersiepen GmbH & Co. KG, 42477 Radevormwald (DE)
(72) Erfinder: Hartmut Heinbach, 57080 Siegen (DE); Klaus Schieffer, 51375 Leverkusen (DE)
(74) Vertreter: Patentanwälte Dr. Solf & Zapf

(56) Entgegenhaltungen:
- DE-U1- 20 217 877
- DE-U1- 20 221 518
- US-A- 3 743 791
- US-A- 3 976 847
- US-A1- 2003 086 562

## Beschreibung

Die vorliegende Erfindung betrifft gemäß dem Oberbegriff des unabhägigen Anspruch 1 eine Wohnungsstation, für eine als Zweidraht-Bus-Anlage ausgebildete Hauskommunikationsanlage, mit einem Audioteil für eine Audio-Kommunikation nach einem Aufbau einer Audio-Verbindung mit einem anderen Stationsgerät innerhalb der Hauskommunikationsanlage.

Hauskommunikationsanlagen und dafür konzipierte Stationsgeräte sind aus einer Vielzahl von Veröffentlichungen bekannt. Lediglich beispielhaft sei auf die EP 1 320 244 A1 und die korrespondierende DE 202 21 518 U1 sowie auf die EP 1 843 590 A1 verwiesen. Nach dem heutigen Stand der Technik sind solche Anlagen zumeist als Bus-Anlagen ausgeführt, wobei alle Stationen über einen gemeinsamen Zweidraht-Bus miteinander verbunden sind. Eine im Haus-Eingangsbereich angeordnete Türstation weist eine bestimmte Anzahl von Ruftasten auf, die den innerhalb von Wohnungen angeordneten Wohnungsstationen zuzuordnen sind. Dies erfolgt in einem Inbetriebnahmeverfahren durch Abspeicherung von bestimmten digitalen Adresscodes. Dazu kann auf die DE 102 53 308 B4 verwiesen werden.

Zum Aufbau einer Audio-Verbindung wird zunächst von einer Station, insbesondere der Türstation, durch Betätigung einer Ruftaste ein Ruf für eine bestimmte andere Station erzeugt. Die auf die Ruftaste programmierte Station erkennt das ihr zugeordnete Rufsignal und erzeugt daraufhin ein akustisches und/oder optisches Rufsignal. Der Benutzer (Wohnungsbewohner) kann dann durch Betätigen einer Annahmetaste den Ruf annehmen, wodurch eine Audio-Verbindung mit der rufenden Station aufgebaut wird. Im Falle einer Video-Wohnungsstation dient ein Video-Display zur Darstellung eines Videobildes, welches von einer Videokamera der Türstation erzeugt und in Form eines modulierten Videosignals über den Bus übertragen wird.

Das oben schon genannte Dokument DE 202 21 518 U1 beschreibt im Zusammenhang mit der Hauskommunikationsanlage eine Funktion nach Art eines auch bei Telefonen üblichen Anrufbeantworters. Hierbei wird auf einen eingehenden Ruf lediglich ein zuvor aufgesprochener Ansagetext abgespielt, und bei Bedarf ist es im Anschluss daran - üblicherweise erst nach einem Aufforderungston ("Piepton") - nur möglich, eine Nachricht zu hinterlassen, die ein Sprachrekorder als Sprachmitteilung aufzeichnet. In den meisten Fällen sind nur zeitlich begrenzte, relativ kurze Ansagetexte und/oder Sprachmitteilungen möglich, so dass der Anrufbeantworter bzw. der Sprachrekorder die Verbindung nach relativ kurzer Zeit auch wieder unterbricht.

Die Veröffentlichungen US-A-3 976 847 und US-A-3 743 791 beschreiben jeweils Telefon-Systeme mit Mehrdraht-Anschluss, wobei auch übliche Freisprechfunktionen vorhanden sind.

Das Dokument DE 202 17 877 U1 beschreibt ein Hauskommunikationssystem mit Zweidraht-Teilnehmeranschluss, wobei die Stationen modular aufgebaut sind. Die Module sind über einen gesonderten Internbus verbunden, wobei ein spezieller Busankoppler ein Verbindungsglied zwischen dem externen Zweidrahtbus und dem Internbus bildet.

Die Veröffentlichung US 2003/0086562 A1 beschreibt ein Freisprech-Telefon.

Das Dokument DE 198 60 318 A1 beschreibt eine spezielle Ausführung eines Anrufbeantworters für ein Telefon.

Der vorliegenden Erfindung liegt die Aufgabe zu Grunde, eine Wohnungsstation der beschriebenen Art so zu verbessern, dass zusätzliche bzw. verbesserte Nutzungsmöglichkeiten bereitgestellt werden können.

Erfindungsgemäß wird dies durch die Merkmale des Anspruchs 1 erreicht. Vorteilhafte Ausgestaltungen sind in den weiteren Ansprüchen enthalten. Zudem ist eine mit mindestens einer erfindungsgemäßen Wohnungsstation ausgestattete Hauskommunikationsanlage Gegenstand des Anspruchs 7.

Erfindungsgemäß weist demnach die Wohnungsstation benutzerseitig aktivierbare oder deaktivierbare Mittel für eine automatische Annahme eines von einem anderen Stationsgerät innerhalb der Hauskommunikationsanlage eingehenden Rufes durch automatisches Aufbauen der Audio-Verbindung als Reaktion auf den eingehenden Ruf auf. Dies bedeutet, dass in einem aktivierten Zustand der Mittel zur automatischen Rufannahme im Falle eines eingehenden Rufes die Audio-Verbindung selbsttätig hergestellt wird, ohne dass zum Verbindungsaufbau von einem Benutzer ein Bedienelement betätigt werden müsste, Die Erfindung gestattet somit im Rahmen einer Hauskommunikationsanlage eine automatische Rufannahme und eine automatische Herstellung von jeweils einer Audio-Verbindung, was beispielsweise für Büros, Kinderzimmer (Babyfon-Funktion), Arztpraxen und dergleichen ein Vorteil ist, weil an der gerufenen Station keine Bedienung zum Verbindungsaufbau erforderlich ist. Allerdings ist die automatische Rufannahme auf Verbindungen zwischen Wohnungsstationen beschränkt.

Anhand von in der Zeichnung veranschaulichten, bevorzugten Ausführungsbeispielen sollen die Erfindung und vorteilhafte Ausgestaltungen im Folgenden genauer erläutert werden. Es zeigen:
- Fig. 1: eine schematische, blockschaltbildartige Darstellung eines möglichen Aufbaus einer erfindungsgemäßen Hauskommunikationsanlage und
- Fig. 2: eine Perspektivansicht eines erfindungsgemäßen Stationsgerätes in einer bevorzugten Ausführung als Video-Wohnungsstation zur Aufputz-Montage (AP-Installation).

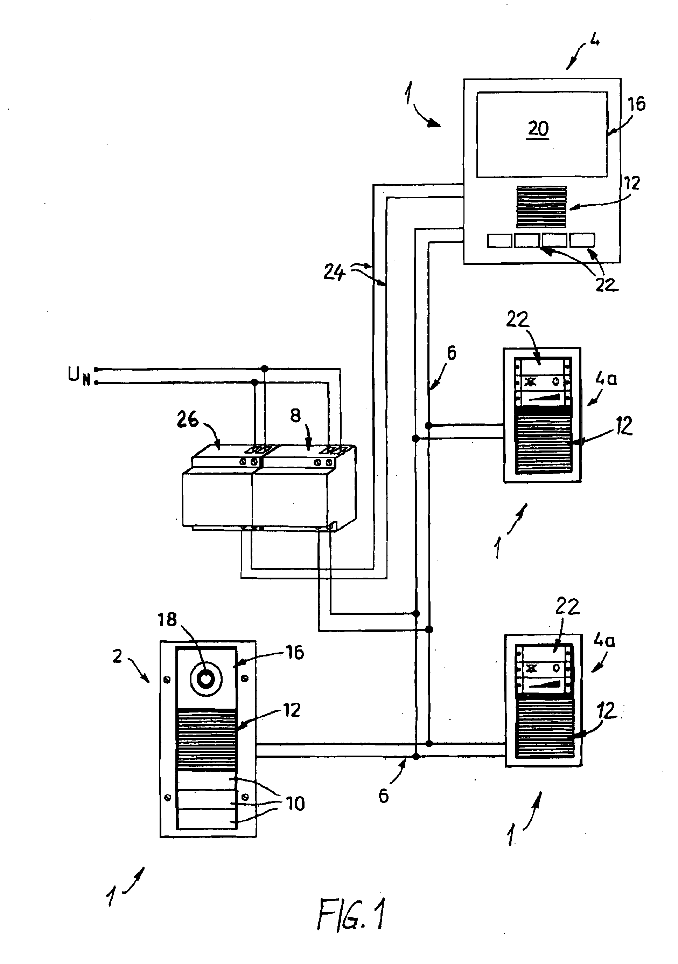

Wie beispielhaft in Fig. 1 dargestellt Ist, besteht eine Hauskommunikationsanlage aus mindestens drei Stationsgeräten 1, und zwar aus mindestens einer Türstation 2 und einer beliebigen Anzahl von Wohnungsstationen 4, 4a (mindestens zwei). Im dargestellten Beispiel weist die Anlage eine Video-Wohnungsstation 4 und zwei Audio-Wohnungsstationen 4a auf. Die Türstation 2 wird in aller Regel im äußeren Eingangsbereich eines Hauses in der Nähe einer Haustür installiert. Die Wohnungsstationen 4, 4a werden jeweils innerhalb einer Wohnung, insbesondere im inneren Eingangsbereich angeordnet. In einer bevorzugten Ausführung der Anlage als "Bus-Anlage" sind oder werden alle Stationen 2, 4, 4a über einen gemeinsamen Zweidraht-Bus 6 miteinander verbunden. Weiterhin ist ein Bussteuergerät 8 an den Bus 6 angeschlossen. Dieses Bussteuergerät 8 kann in einer zentralen Elektroverteilung des Hauses untergebracht und dort an eine Netzspannung U_{N} angeschlossen sein.

Die Türstation 2 weist eine bestimmte Anzahl von Ruftasten 10 auf, die den vorhandenen Wohnungsstationen 4, 4a zuzuordnen sind. Dies erfolgt in einem Inbetriebnahmeverfahren durch Abspeicherung von bestimmten digitalen AdressCodes.

Der Bus 6 ist zur Übertragung von digitalen Steuersignalen und Kommunikationssignalen, und zwar Audio- und Videosignalen, ausgelegt und überträgt bevorzugt zusätzlich auch die Versorgungsspannung von einem Netzteil im Steuergerät 8 an die einzelnen Stationen 2, 4 und 4a.

Für eine Audio-Sprechkommunikation weisen alle Stationen 1 einen Audioteil 12 auf, der vorzugsweise zum Freisprechen/Freihören ausgelegt ist und dazu ein Mikrofon und einen Lautsprecher aufweist (in der Zeichnung nicht zu sehen). Die Türstation 2 und die Video-Wohnungsstation 4 weisen zusätzlich jeweils einen Videoteil 16 auf, wobei der Videoteil 16 der Türstation 2 eine Videokamera 18 und der Videoteil 16 der Wohnungsstation 4 ein Video-Display 20 vorzugsweise in Form eines flachen TFT- oder LCD-Monitors aufweisen. Die Videokamera 18 bzw. die Türstation 2 ist mit Mitteln zum Erzeugen eines über den Bus 6 zu übertragenden Bus-Videosignals ausgestattet, wobei dieses Videosignal derart frequenzmoduliert ist, dass es außerhalb (oberhalb) einer hörbaren Audio-Frequenz liegt. Dadurch werden Beeinträchtigungen des Audiosignals durch das Videosignal vermieden. Jede Wohnungsstation 4, 4a weist weiterhin Bedien- und /oder Anzeigeelemente 22 auf.

In weiterer vorteilhafter Ausgestaltung ist zumindest die Video-Wohnungsstation 4 über zusätzlich zum Bus 6 vorhandene Versorgungsleitungen 24 mit einer Zusatz-Spannungsversorgung 26 verbunden oder verbindbar. Diese Maßnahme stellt eine ausreichende Energieversorgung insbesondere für den Betrieb des Displays 20 der Wohnungsstation 4 sicher.

Erfindungsgemäß weist nun das Stationsgerät 1, und zwar zumindest eine der Wohnungsstationen 4, 4a, benutzerseitig aktivierbare oder deaktivierbare Mittel für eine automatische Annahme eines von einem anderen Stationsgerät innerhalb der Hauskommunikationsanlage eingehenden Rufes durch automatisches Aufbauen einer Audio-Verbindung als Reaktion auf den eingehenden Ruf auf. Dies bedeutet, dass in einem aktivierten Zustand der Mittel zur automatischen Rufannahme bei einem eingehenden Ruf die Audio-Verbindung selbsttätig hergestellt wird, ohne dass zum Verbindungsaufbau ein Bedienelement betätigt werden müsste.

In einem Auslieferzustand des Stationsgerätes 1 ist diese Funktion für den Benutzer nicht zugänglich, indem ein entsprechender Menüpunkt in einem bevorzugt auf dem Display 20 dargestellten Benutzermenü nicht erscheint. Eine Freischaltung der Funktion erfolgt durch einen Installateur bei der Inbetriebnahme der Hauskommunikationsanlage auf Kundenwunsch. Erst nach dieser Freischaltung erscheint im Benutzermenü der Punkt "Automatische Rufannahme". Diese Funktion kann dann von dem Benutzer im Menü entsprechend aktiviert oder deaktiviert werden.

In Kombination mit dieser Funktion ist es vorteilhaft, den Tonruf abschalten zu können. Auch dies erfolgt über das Benutzermenü. Über die Anzeigeelemente 22 kann der jeweilige Betriebszustand optisch signalisiert werden, beispielsweise über ein Leuchtsymbol in Form einer durchgestrichenen Glocke. Wenn dieses Leuchtsymbol dauerleuchtet, ist die Rufabschaltung aktiviert (Tonruf aus), und die automatische Rufannahme ist deaktiviert. Bei dauerhaft ausgeschaltetem Leuchtsymbol sind beide Funktionen deaktiviert, d. h. keine automatische Rufannahme und normaler Tonruf. Durch ein Blinken des LED-Signals wird signalisiert, dass die automatische Rufannahme aktiv ist. Um auch eine Aussage über den Zustand der Rufabschaltung zu erhalten, kann vorgesehen sein, durch kurze Betätigung des zugehörigen Schaltelementes von dem blinkenden Zustand für eine bestimmte Zeit von beispielsweise zwei Sekunden in einen anderen Anzeigemodus umzuschalten. Wenn dann für diese kurze Zeit das Signal leuchtet, ist die Rufabschaltung aktiviert, und wenn das Signal nicht leuchtet, ist die Rufabschaltung nicht aktiv. Bei aktivierter automatischer Rufannahme wird nach vollständigem Ablauf des Tonrufs, d. h. bevorzugt mit einer Verzögerung von etwa zwei Sekunden, die Audioverbindung selbsttätig hergestellt.

Es sei noch bemerkt, dass die automatische Rufannahme erfindungsgemäβ auf Internrufe beschränkt ist, d. h. auf Verbindungen zwischen Wohnungsstationen 4, 4a.

Die automatische Rufannahme gestattet im Rahmen einer Hauskommunikationsanlage einen Aufbau einer Sprechverbindung ohne Bedienung an der gerufenen Station, z. B. für Büros, Kinderzimmer (Babyfon-Funktion), Arztpraxen und dergleichen.

Wie oben bereits erwähnt wurde, kann optional die Zusatz-Spannungsversorgung 26 von insbesondere 24 Volt an das/jedes Gerät 1 angeschlossen werden. In diesem Fall steht unabhängig von der Versorgung über den Zweidraht-Bus stets genügend Leistung zur Verfügung.

In vorteilhafter Ausgestaltung kann dabei das Stationsgerät 1 Mittel für eine automatische (dynamische) Erkennung der angeschlossenen Zusatzversorgung aufweisen. Wenn diese Erkennungsmittel das Vorhandensein der Zusatz-Versorgungsspannung 26 feststellen, können automatisch bestimmte Zusatzfunktionen der Station 1 freigegeben werden. Dies betrifft bei der Video-Wohnungsstation 4 insbesondere die Aktivierung des Displays 20 unabhängig von dem Betriebszustand der anderen Stationen innerhalb der Anlage, Bei Versorgung der Stationen 1 allein über den Bus wäre die Leistung begrenzt, so dass beispielsweise nicht alle Displays 20 aller Video-Stationen gleichzeitig in Betrieb sein könnten. Bei angeschlossener und automatisch erkannter Zusatzversorgung 26 können auch beliebige Internrufe und sonstige Schaltfunktionen (beispielsweise Steuerung von Treppenhauslicht, Türöffner und dergleichen) freigegeben und dann über das Display 20 menügeführt gesteuert werden. Außerdem können optional bestimmte Betriebszustände - zusätzlich zu den Anzeigeelementen 22 - auch auf dem Display 20 insbesondere verbal (alphanumerisch) angezeigt werden.

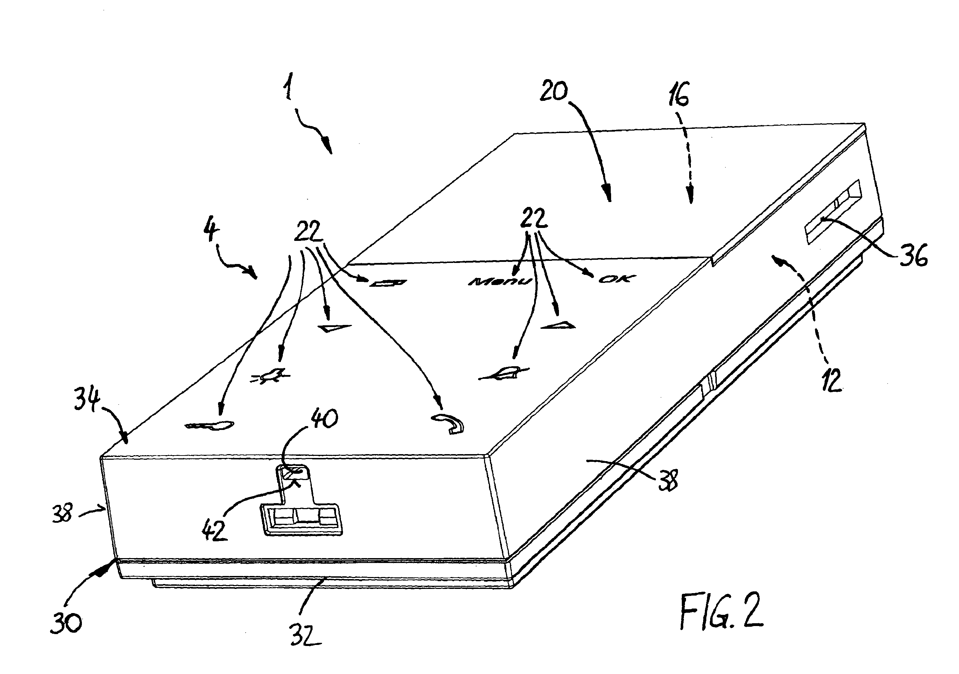

In Fig. 2 ist eine besonders vorteilhafte Ausführungsform der Vdeo-Wohnungsstation 4 veranschaulicht. Dieses spezielle Stationsgerät 1 weist ein zur Aufputz-Montage vorgesehenes Gerätegehäuse 30 auf, welches dazu aus einem plattenartigen Montage-Basisteil 32 (Grundplatte) und einem flachen, haubenartigen Gehäuse-Vorderteil 34 besteht. Ein erstes besonderes Merkmal dieser Ausführungsform ist, dass ein (nicht erkennbarer) Lautsprecher des Audioteils 12 innerhalb des Gehäuses 30 in einem zur vorderen Geräte-Sichtseite hin von dem Display 20 überdeckten Bereich, d. h. "unterhalb" des Displays 20, angeordnet ist. Daraus resultiert eine sehr kompakte Ausführung des Gerätes 1. Um trotz der abgedeckten Anordnung des Lautsprechers eine effektive Schallführung nach außen zu erreichen, ist dem Lautsprecher eine Schallkammer mit mindestens einer seitlichen Gehäuse-Schallöffnung 36 zugeordnet. In bevorzugter Ausgestaltung weist das Gehäuse 30 aber im Bereich von zwei gegenüberliegenden Seitenwandungen 38 jeweils eine von zwei Schallöffnungen 36 auf, wobei jede Schallöffnung 36 mit der innerhalb des Gehäuses 30 dem Lautsprecher vorgeordneten Schallkammer über einen Schallkanal verbunden ist.

Weiterhin ist bevorzugt vorgesehen, dass ein ebenfalls nicht erkennbares Mikrofon des Audioteils 12 derart innerhalb des Gerätegehäuses 30 angeordnet ist, dass es akustisch vom rückwärtigen Schall des Lautsprechers weitgehend entkoppelt ist. Dazu ist auch dem Mikrofon eine Schall kammer vorgeordnet, die auf einer den Schallöffnungen 36 entfernt liegenden Unterseite des Gerätes 1 über einen Schallkanal 40 und eine Schallöffnung 42 nach außen mündet.

Die Erfindung ist nicht auf die dargestellten und beschriebenen Ausführungsbeispiele beschränkt, sondern umfasst auch alle im Sinne der Erfindung gleichwirkenden Ausführungen. Insbesondere ist die Erfindung nicht nur für Bus-Systeme, sondern auch für andere Verdrahtungssysteme geeignet, z. B. Mehrdrahtsysteme, wie so genannte 1+n-Anlagen, oder Ethernet-Systeme (TCP/IP) oder auch Funk-Anlagen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Wohnungsstation (4, 4a) für eine aus mindestens drei Stafionsgeräten (1), und zwar mindestens einer im äußeren Eingangsbereich eines Hauses zu installierenden Türstation (2) und mindestens zwei jeweils innerhalb einer Wohnung zu installierenden Wohnungsstationen (4, 4a), bestehenden, als Zweidraht-Bus-Anlage ausgebildete Hauskommunikationsänlage, mit einem Audioteil (12) für eine Audio-Kommunikation nach einem Aufbau einer Audio-Verbindung mit einem anderen Stationsgerät (1) der Hauskommunikationsanlage,
gekenntzeichnet durch benutzerseitig aktivierbare und deaktivierbare Mittel für eine automatische Annahme eines von einem anderen Stationsgerät (1) innerhalb der Hauskommunikationsanlage eingehenden Rufes durch automatisches Aufbauen der Audio-Verbindung als Sprechverbindung zwischen den Audioteilen (12) der beiden Stationsgeräte ohne Bedienung als selbsttätige Reaktion auf den eingehenden Ruf, wobei die automatische Rufannahme auf einen Internruf von einer anderen Wohnungsstation (4, 4a) und damit auf Verbindungen zwischen Wohnungsstationen (4, 4a) beschränkt ist.

2. Wohnungsstation nach Anspruch 1,
**gekennzeichnet durch** eine Ausgestaltung als Video-Wohnungsstation (4) mit einem Videoteil (16) mit einem Display (20) zur Darstellung eines Videobildes und/oder eines Benutzermenüs, wobei die Wohnungsstation (4) Mittel zur Erzeugung des Benutzermenüs und für menügeführte Einstellungen aufweist.

3. Wohnungsstation nach Anspruch 1 oder 2,
**gekennzeichnet durch** Mittel zum benutzerseitigen Aktivieren oder Deaktivieren eines akustischen Tonrufes bei eingehendem Ruf.

4. Wohnungsstation nach einem der Ansprüche 1 bis 3,
**gekennzeichnet durch** Mittel zum selbsttätigen Erkennen einer Zusatz-Spannungsversorgung (26).

5. Wohnungsstation nach einem der Ansprüche 2 bis 4,
**dadurch gekennzeichnet, dass** ein Lautsprecher des Audioteils (12) innerhalb eines Gerätegehäuses (30) in einem zu einer vorderen Geräte-Sichtseite hin von dem Video-Display (20) überdeckten Bereich angeordnet ist, wobei dem Lautsprecher eine Schallkammer mit mindestens einer seitlichen Gehause-Schallöffnung (36) zugeordnet ist.

6. Wohnungsstation nach Anspruch 5,
**dadurch gekenntzeichnet, dass** ein Mikrofon des Audioteils (12) derart innerhalb des Gerätegehäuses (30) angeordnet ist, dass es akustisch vom rückwärtigen Schall des Lautsprechers entkoppelt ist, wobei
dem Mikrofon eine Schallkammer mit einem zu einer Gehäuse-Schallöffnung (42) führenden Schallkanal (40) vorgeordnet ist.

7. Hauskommunikationsanlage mit mindestens einer Wohnungsstation (4,4a) nach einem der vorhergehenden Ansprüche.

## Claims

1. A dwelling station (4, 4a) for a house communication system which consists of at least three station apparatus (1), namely at least one door station (2) to be installed in the outer entrance region of a house and at least two dwelling stations (4, 4a) to be installed within a dwelling in each case, and which is in the form of a two-wire bus system, having an audio part (12) for audio communication after an audio connection with another station apparatus (1) of the house communication system has been established,
**characterised by** means, activatable and decativatable by the user, for an automatic acceptance of a call incoming from another station apparatus (1) within the house communication system through automatic establishment of the audio connection as a voice connection between the audio parts (12) of the two station apparatus without operation as an automatic reaction to the incoming call, wherein the automatic call acceptance is restricted to an internal call from another dwelling station (4, 4a) and thereby to connections between dwelling stations (4, 4a).

2. A dwelling station according to claim 1, **characterised by** a design as a video dwelling station (4) with a video part (16) with a display (20) for showing a video image and/or a user menu, wherein the dwelling station (4) has means to produce the user menu and for menu-driven settings.

3. A dwelling station according to claim 1 or 2, **characterised by** means for activation or deactivation by the user of an acoustic ringing tone in the event of an incoming call.

4. A dwelling station according to any one of claims 1 to 3, **characterised by** means for the automatic recognition of an additional voltage supply (26).

5. A dwelling station according to any one of claims 2 to 4, **characterised in that** a speaker of the audio part (12) is arranged within an apparatus housing (30), in a region covered by the video display (20) towards a front apparatus visible-face, wherein a sound chamber with at least one lateral housing sound-hole (36) is associated with the speaker.

6. A dwelling station according to claim 5, **characterised in that** a microphone of the audio part (12) is arranged within the apparatus housing (30) in such a manner that it is acoustically uncoupled from the rearward sound of the speaker, wherein a sound chamber with a sound channel (40) leading to a housing sound-hole (42) is arranged in front of the microphone.

7. A house communication system having at least one dwelling station (4, 4a) according to any one of the preceding claims.

## Revendications

1. Station d'appartment (4, 4a) pour une installation de communication domestique réalisée sous la forme d'un système bus à deux fils, se composant d'au moins trois appareils de station (1), c'est-à-dire au moins une station de porte (2) à installer dans la zone d'entrée extérieure d'une maison et au moins deux stations d'appartment (4, 4a) à installer respectivement dans un logement, avec une partie audio (12) pour une communication audio après un établissement d'une liaison audio avec un autre appareil de station (1) de l'installation de communication domestique,
**caractérisée par** des moyens activables et désactivables par l'utilisateur pour une prise automatique d'un appel entrant d'un autre appareil de station (1) dans l'installation de communication domestique par l'établissement automatique de la liaison audio sous forme de communication vocale entre les parties audio (12) des deux appareils de station sans commande en réaction automatique à l'appel entrant, la prise d'appel automatique étant limitée à un appel interne d'une autre station d'appartment (4, 4a) et ainsi aux communications entre des stations d'appartment (4, 4a).

2. Station d'appartment selon la revendication 1, **caractérisée par** une configuration comme station d'appartment vidéo (4) avec une partie vidéo (16), avec un écran d'affichage (20) pour la représentation d'une image vidéo et/ou d'un menu utilisateur, la station d'appartment (4) présentant des moyens pour générer le menu utilisateur et pour des réglages par menu.

3. Station d'appartment selon la revendication 1 ou 2, **caractérisée par** des moyens pour activer ou désactiver par l'utilisateur une sonnerie acoustique en cas d'appel entrant.

4. Station d'appartment selon l'une quelconque des revendications 1 à 3, **caractérisée par** des moyens pour détecter automatiquement une alimentation en courant supplémentaire (26).

5. Station d'appartment selon l'une quelconque des revendications 2 à 4, **caractérisée en ce qu'**un haut-parleur de la partie audio (12) est disposé dans un boîtier d'appareil (30) dans une zone recouverte vers un côté apparent avant d'appareil par l'écran vidéo (20), une chambre de résonance avec au moins une embouchure latérale de récepteur de boîtier (36) étant associée au haut-parleur.

6. Station d'appartment selon la revendication 5, **caractérisée en ce qu'**un microphone de la partie audio (12) est disposé dans le boîtier d'appareil (30) de manière à être découplé acoustiquement du son arrière du haut-parleur, une chambre de résonance avec un canal de résonance (40) menant à une embouchure de récepteur de boîtier (42) étant disposée en amont du microphone.

7. Installation de communication domestique avec au moins une station d'appartment (4, 4a) selon l'une quelconque des revendications précédentes.
